# EUROPÄISCHE PATENTSCHRIFT

(11) **EP 1 826 248 B1**
(45) Veröffentlichungstag und Bekanntmachung des Hinweises auf die Patenterteilung: **24.12.2008**
(21) Anmeldenummer: 07003272.7
(22) Anmeldetag: 16.02.2007
(51) Int. Cl.: C09D 4/00, C23C 16/00, B27K 7/00

(54) **Behälterverschlussbeschichtungszusammensetzung, Behälterverschlussbeschichtung, deren Herstellung und Anwendung**
Container fastening coating composition, container fastening coating, its manufacture and application
Composition de revêtement de fermeture de récipient, revêtement de fermeture de récipient, leur fabrication et utilisation

(30) Priorität: 22.02.2006 DE 102006008534
(43) Veröffentlichungstag der Anmeldung: 29.08.2007
(73) Patentinhaber: Stiftung nano innovations -for a better living, 4600 Olten/Kanton Solothurn (CH)
(72) Erfinder: Jürgens, Ralf, 24558 Henstedt-Ulzburg (DE); Schwindt, Sascha, 66121 Saarbrücken (DE)
(74) Vertreter: Sieckmann, Ralf

(56) Entgegenhaltungen:
- EP-A- 1 736 178
- US-A- 5 348 799

## Beschreibung

Die Erfindung betrifft eine nanoskalige Beschichtung auf Kork und / oder Glas auf der Basis von mittels eines modifizierten SolGel-Pozesses erzeugtem polymerisiertem SiO₂ mit darin eingelagerten bioziden Wirkstoffen, die Herstellung der Beschichtung, die Weiterverarbeitung der Beschichtung sowie ihre Verwendung als Veredelung von Korken und / oder anderen Verschlüssen für Behälter insbesondere Flaschen.

### Stand der Technik:

Lt. Römpp Lexikon Lebensmittelchemie, Stichwort Weinfehler, 1995, S. 927 f, wird der Korkgeschmack bei 2% der mit Naturkork verschlossenen Weine durch 2,4,6-Trichloranisol (TCA) hervorgerufen, einem mikrobiellen Abbbauprodukt der Korksubstanz.

Die DE 40 13 219 schlägt ein Verfahren zur Desodorierung von Kork durch Dampfdestillation vor, um unangenehme Gerüche erzeugende Substanzen aus dem Kork zu entfernen. Dabei wird der Kork in einen Behälter gegeben, es wird in einem Dampfgenerator erzeugter Dampf dem Behälter zugeführt und der Dampf mit der unangenehmen Geruch erzeugenden Substanz aus dem Behälter abgeführt. Dabei wird davon ausgegangen, dass Korkmaterial und fertige Korken an Orten gelagert werden, an denen die Atmosphäre mit Chloranisolen verunreinigt ist und die Kontamination des Korkens bereits vor der Verkorkung des Weines stattfindet. Dabei lässt dieser Stand der Technik außer Acht, dass nur bei 1 - 2 % der Korkproben, die in portugiesischen Korkeichenwäldern gesammelt wurden, TCA gefunden werden konnte und die Gehalte weit unter der Wahrnehmungsgrenze von TCA in Wein lagen. Es müssen also andere Pfade für den Eintrag von Chlorphenolen und Chloranisolen in den Korken berücksichtigt werden. Ebenfalls von Nachteil ist es, dass nicht verhindert werden kann, dass es nach der Dampfdestillation des Korkens zu einer Schimmelpilzbesiedlung kommen kann. Weiterer Nachteil ist es, dass die mikrobielle Methylierung von Chlorphenol und die daraus resultierende Bildung von TCA in der Weinflasche nach dem Verkorken nicht verhindert werden.

In DE 37 05 422 A1 wird ein Sterilisationsverfahren für Flaschenkorken vorgeschlagen, bei dem Korken mittels ozonisiertem Wasser und/oder einer ozonisierten Siliconemulsion getaucht bzw. besprüht werden. Von Nachteil ist bei diesem Stand der Technik, dass nicht verhindert werden kann, dass es nach der Sterilisation des Korkens zu einer Schimmelpilzbesiedlung kommen kann. Weiterer Nachteil ist es, dass die mikrobielle Methylierung von Chlorphenol und die daraus resultierende Bildung von TCA in der Weinflasche nach dem Verkorken nicht verhindert werden.

DE 198 02 297 A1 beschreibt ein Dekontaminations- und Sterilisationsverfahren von Kork und ganz oder teilweise daraus bestehenden Korken, bei dem Mikrowellenstrahlung mit einer Leistung von 20 bis 1000 W/(kg Korken) über einen Zeitraum von 5 bis 30 Minuten dem Korkmaterial zugeführt wird. Der Nachteil hier bei ist, dass es nicht zu einer dauerhaften Sterilisation kommt, so dass bei erneuter Besiedlung des Korkens durch Schimmelpilze eine wieder einsetzende Bildung von TCA nicht verhindert werden kann. Ebenfalls von Nachteil ist es, dass die Metabolisierung von Chlorphenolen durch Schimmelpilze in der bereits abgefüllten Flasche nicht gestoppt wird und es somit zur weiteren Produktion von TCA kommt.

Die DE 20 2004 016 526 A1 schlägt einen Korkverschluss vor, der eine unmittelbar auf der Anlagefläche des Korkens aufgebrachte, glasähnliche Beschichtung aufweist. Diese Beschichtung, die aus SiOₓ, TiOₓ, SnOₓ NbₓO_{y} und AlₓO_{y} bestehen kann, wird mittels des CVD-Verfahrens (Chemical-Vapour-Deposition-Verfahren) in Schichten mit einer Dicke von kleiner als 1000 nm und größer als 300 nm auf den Korkverschluss aufgebracht. Damit sollen gute Barriereeigenschaften für gasförmige Stoffe erreicht werden. Es gilt festzustellen, dass der unbehandelte und unbeschichtete Naturkorken schon von Natur aus über sehr gute Barriereeigenschaften verfügt und absolut gasdicht ist. Die Gasdichtigkeit von Kork ist eine der gewünschten Eigenschaften, weshalb dieser Naturstoff schon sehr früh als Verschluss verwendet wurde. Eine zusätzliche Barriere ist technisch nicht notwendig und daher nicht sinnvoll. Ein weiterer Nachteil dieses Standes der Technik ist, dass eine Besiedlung des Verschlusses durch TCAproduzierende Schimmelpilze nicht verhindert wird.

Die EP 1 736 178 A und die US 5348 799 A beschreiben Beschichtungen enthaltend Siliziumdioxid und Chitosan als antibakteriellen Wirkstoff, jedoch keine Behälterverschlussbeschichtungen.

DE 101 39 305 A1 beschreibt eine Barrierebeschichtung, die auf das Substrat mittels chemischer Plasma-Impuls-Bedampfung (PiCVD) aufgebracht wird. Dabei kann die Beschichtung aus SiOₓ, TiOₓ, SnOₓ NbₓO_{y} und AlₓO_{y}, und amorphen Kohlenwasserstoffen sowie elektrisch leitfähige Schichten bestehen. In einer bevorzugten Ausführungsform weist die Barrierebeschichtung eine Dicke > 1000 nm, bevorzugt < 300 nm auf.

Es ist bereits bekannt, antibakterielle bzw. antimikrobielle Wirkstoffe zur Vernichtung bzw. Wachstumshemmung von Bakterien, Pilzen, Algen und Viren und zum Schutz von Materialien und Lebensmitteln gegen mikrobielle Verunreinigung einzusetzen. Die umgebungsbedingte, mikrobielle Kontamination durch ca. 2 bis 3 Milliarden unterschiedlicher Mikroorganismen, davon allein ca. 15.000, die sich über die Luft ausbreiten und somit nahezu jede Oberfläche besiedeln können, stellt ein stetig wachsendes gesundheitliches Gefährdungspotenzial dar. Im Folgenden wird für die Wirkung der Substanzen der Begriff "antimikrobiell" verwendet, damit ist die biozide bzw. biostatische Wirkung auf Mikroorganismen gemeint.

Als antimikrobielle Wirkstoffe werden anorganische Chemikalien und Metallverbindungen wie z.B. Silberzeolith (Kanedo), Silbersilikat, Silbersulfonat und Silbermetall, Titanoxid, lösliches Glaspulver mit Metallionen, Eisen-Phthalocyanat, Kupfersulfonat, Zink-Pyrithion; Organosilikone wie z.B. organisches Silikon mit Ammoniumsalz: Octadecyldimethyl-(3-(trimethoxysilyl)-propyl)-ammoniumchlorid; quaternisierte Ammoniumsalze, wie z.B. Didecyldimethylammoniumchlorid, Hexadecylpyridiniumchlorid, Cetyldi-methylbenzylammoniumchlorid, Polyoxyalkyltrialkylammoniumchlorid; Tenside, wie z.B. amphoteres Tensid: Alkyldi(aminoethyl)glycin, nichtionogenes Tensid: Glycerinstearat; Guanidin wie z.B. 1,1-Hexamethylen-bis-5-(4-chlorphenyl)-biguanid-digluconat, Polyhexa-methylenbiguanidhydrochlorid; Phenole wie z.B. Biozol, Thymol, Alkylenbisphenol-Natriumsalz, *p*-Chlor-*m*-xylenol (PCMX), 5-Chlor-2-(2,4-dichlorphenoxy)-phenol (Triclosan); Aniline wie z.B. 3,4,4-Trichlorcarbanilin, Imidazole wie z.B. 2-(4-Thiazolyl)-benzimidazol, 2-(Thiocyanomethylthio)-benzothiazol (TCMTB); Naturprodukte wie Chitosan, Propolis, Hinokitol; Kohlenhydrate wie z.B. Neomycinsulfat, Ester wie z.B. Diethylphthalat, Parabene zum Einsatz gebracht.

Ebenso ist es bekannt, Sol-Gel-Schichten mittels eines Sol-Gel-Prozesses zu erzeugen. Dabei werden vorzugsweise Metalloxid-Xerogele aus SiO₂, R-SiOₙ, R₂SiOₙ, Al₂O₃, ZrO₂, TiO₂ oder deren Gemische verwendet, wobei R = H, Alkyl, Aryl, Epoxi-alkyl, Aminoalkyl- und n = 1,5 oder 1 sein kann. Diese Gele erhält man durch die Hydrolyse und Kondensationsreaktionen von Siliziumalkoxiden. Dabei werden die Moleküle auf Grund der während des Prozesses stattgefundenen Polymerisation miteinander verbunden. Das gesamte Volumen der Sole wird dabei polymerisiert. Die polymerisierten Siliziumoxide bilden ein SiO₂-Gel. Der schematische Aufbau des SolGel-Prozesses verläuft wie folgt.

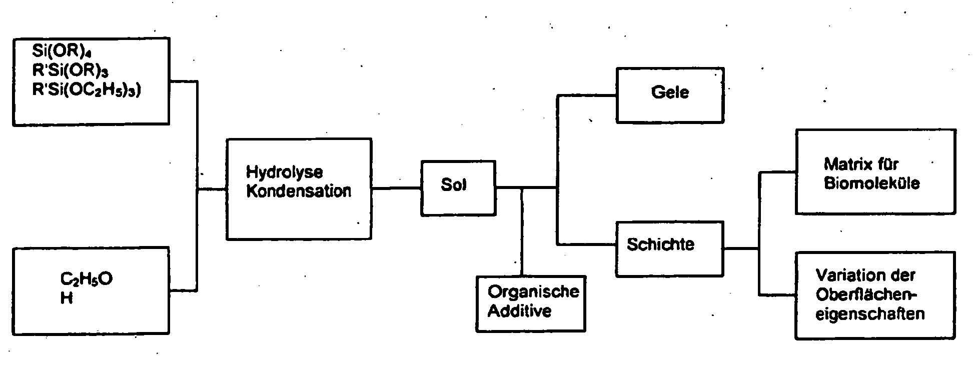

Die fortlaufende Kondensation unter Alkoholabspaltung führt zu einem sphärischen Anwachsen der Partikel, was sich ab einer Dicke von ca. 70 nm auf Grund der Lichtstreuung an den Partikeln (Tyndall-Effekt) nachweisen läßt. Durch einen als Gelierung bezeichneten Vorgang können Sole in Gele übergehen. Die Partikel wachsen weiter, bis sie sich berühren und durch weitere Kondensation miteinander vernetzen. Letztendlich bildet sich dabei eine feste Phase aus, die mit einer flüssigen Phase durchdrungen ist. Als Gele werden formbeständige, leicht deformierbare, an Flüssigkeit reiche disperse Systeme bezeichnet, die aus einem festen, unregelmäßigen dreidimensionalen Netzwerk und einer Flüssigkeit bestehen.

Zur Funktionalisierung werden dem Sol aus Tetraethoxysilan, Trimethoxymethylsilan, oder Dimethoxydimethylsilan zum einen aliphatische und aromatische Aldehyde, Carbonsäuren oder Aminocarbonsäuren zugesetzt. Alternativ wird durch veränderte Substituenten am Precursor (R'Si(OC₂H₅)₃) das SiO₂-Netzwerk organisch modifiziert. Ebenfalls wird dafür die Synthese verschiedener Alkyltriethoxysilane mit Azomethinbindung durch die Umsetzung von Aminopropyltriethoxysilan mit Benzaldehydderivaten bzw. Acetylaceton genutzt.

Anorganisch-oxidische Gele werden häufig durch Umsetzung von Elementalkoxiden mit Alkohol-Wasser-Mischungen oder in reinem Wasser hergestellt. Der Alkohol dient hierbei der Erzeugung eines homogenen Reaktionsgemisches und kann durch andere protische oder aprotische Lösungsmittel ersetzt werden. Die Flexibilität und Porosität der Sol-Gel-Schichten lassen sich durch Modifikation der Rezepturen verändern. Ein höherer Anteil von R-SiOₙ und/oder R₂SiOₙ verbessert die Flexibilität der Schichten, durch die Bildung von Mischoxiden wie Al₂O₃, ZrO₂, TiO₂ kann die Abrasionsbeständigkeit und spezifische Härte verstärkt werden.

Die Substitutions-/ Hydrolysereaktion von Siliziumalkoxiden verläuft wie folgt.

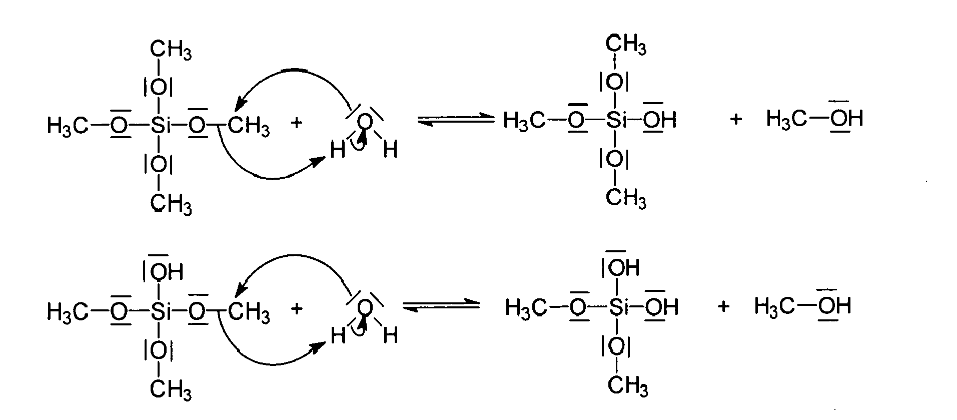

### Erfindung

### Zusammensetzung

Der vorliegenden Erfindung liegt zunächst die Aufgabe zugrunde, eine antibakterielle Behälterverschlussbeschichtungszusammensetzung bereitzustellen.

Diese Aufgabe wird durch die Auswahl einer SiO₂-Schicht in spezieller Dicke zusammen mit einem speziellen Mengenintervall spezieller Wirkstoffe gelöst.

Die Erfindung betrifft daher eine nanoskalige, insbesondere 50 nm bis 300 nm, vorzugsweise zwischen 120 nm und 250 nm dicke antibakterielle Behälterverschlussbeschichtung, enthaltend eine nicht poröse anorganische polymerisierte SiO₂-Schicht, aufgebracht auf einen Behälterverschluss aus Kork, und/oder Glas, wobei die Beschichtung 0,1 Gew-% bis 50 Gew-%, vorzugsweise 1 Gew-% bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält, dadurch gekennzeichnet, daß der antibakterielle Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.
Nach einer bevorzugten Ausführungsform werden miteinander kompatiblen bioziden Wirkstoffen wie Chitosan, 2,4,4'Trichlor-2'-hydroxy-diphenylether und quartären Ammoniumsalzen, mit sich ergänzenden Wirkungen auf Mikroorganismen, die nichteluierbar in die SiO₂-Matrix der Beschichtung verankert werden, eingesetzt.

Unter Behälterverschluss in Sinne der vorliegenden Erfindung versteht man beispielsweise einen am Behälter befestigten oder abnehmbaren Verschluss wie beispielsweise Schraubdeckel, Zwischendeckel, Überkappe, Pipettenmontur, Zerstäuberpumpe, Lotionspumpe, Schraubverschluss mit Tropfeinsatz, Scharnierverschluss, (ablösbare) Klappdeckel, Stöpsel, Schliffstöpsel, Korken usw. Bevorzugt ist der Verschluss ein Korken.

Nach einer bevorzugten Ausführungsform betrifft die vorliegende Erfindung eine Zusammensetzung der vorgenannten Art, wobei das SiO₂-erzeugenden Mittel ausgewählt ist aus
➢ 0 bis 100 Gew-%, vorzugsweise 1 bis 99 Gew-% Tetraethoxysilan,
➢ 0 bis 100 Gew-%, vorzugsweise 1 bis 99 Gew-% Trimethoxymethylsilan und
➢ 0 bis 100 Gew-%, vorzugsweise 1 bis 99 Gew-% Dimethoxydimethylsilan.

Nach einer bevorzugten Ausführungsform betrifft die vorliegende Erfindung eine Zusammensetzung der vorgenannten Art, wobei das SiO₂ erzeugende Mittel weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Nach einer bevorzugten Ausführungsform betrifft die vorliegende Erfindung eine Zusammensetzung der vorgenannten Art, wobei das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexachlor-2,2'-dihydroxy-diphenylmethan, 5,5'-Dichlor-2,2'-dihydroxy-diphenylsulfid, 2,4,5,2'4',5' Hexachlordihydroxy-diphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

Weiter sind dies Phenole in der SiO₂-Matrix, die bevorzugte Gruppe sind die halogenierten Dihydroxydiphenylmethane, sulfide, und -ether, die beispielsweise ausgewählt sind aus 5,5'-Dichlor-2,2'-dihydroxy-diphenylmethan (Preventol DD, Bayer AG), 3,5,3',5'-Tetrachlor-4,4'-dihydroxy-diphenylmethan (Monsanto Corporation), 3,5,6,3',5',6'-Hexchlor-2,2'-diydroxy-diphenylmethan (Hexachlorophen), 5,5'-Dichlor-2,2'-dihydroxy-diphenylsulfid (Novex, Boehringer Mannheim), 2,4,5,2'4',5'Hexachlordihydroxy-diphenylsulfid, 3,5,3',5'-Tetrachlor-2,2'-Dihydroxy-diphenylslfid (Actamer, Monsanto), 4,4'-Dihydroxy-2,2'dimethyl-dipeylmethan, 2'2-Dihydroxy-5',5-diphenylether (Unilever), 2,4,4'Trichlor-2'-hydroxy-diphenylether (Irgasan DP 300, Ciba-Geigy).

Nach einer bevorzugten Ausführungsform betrifft die vorliegende Erfindung eine Zusammensetzung der vorgenannten Art, wobei es sich bei dem Phenol um 2,4,4'Trichlor-2'-hydroxy-diphenylether handelt.

Besonders bevorzugt sind hier die halogenierten Dihydroxydiphenylmethane und hier insbesondere das 2,4,4'Trichlor-2'-hydroxy-diphenylether (Triclosan), welches in vielen anderen Produkten bereits zur Anwendung kommt und auf seine Toxizität für den Menschen hinreichend untersucht ist.

Weiterhin als Wirkstoffe werden substituierte quartäre Ammoniumsalzen der alkylierten Phosphorsäure eingesetzt, deren biostatische Wirkung in zahlreichen Veröffentlichungen dokumentiert ist. Wegen der sehr guten Wasserlöslichkeit dieser Salze ist ihre Einbindung in die SiO₂-Matrix besonders vorteilhaft. Auch halogenierte quartäre Ammoniumsalze wie das Cetyltrimethylammoniumbromid, haben ihre antimikrobielle Wirkung unter Beweis gestellt und können in der SiO₂-Matrix zum Einsatz kommen.

Das Mischungsverhältnis der antimikrobiellen Wirkstoffe Chitosan, 2,4,4'Trichlor-2'-hydroxy-diphenylether . (Triclosan) und quartäre Ammoniumsalze in der Sole untereinander ist ebenfalls von Bedeutung. In Summe können die antimikrobiellen Wirkstoffe zwischen 0,1 Gew-% und 50 Gew-%, vorzugsweise 1 bis 20 % bezogen auf die Gesamtzusammensetzung der Sole ausmachen. Der Anteil der jeweiligen antimikrobiellen Wirkstoffe kann dabei zwischen 1 Vol-% und 98 Vol-% liegen. Durch unterschiedliche Rezepturen (Mengenanteile) kann die antimikrobielle Wirkung auf die jeweilige Schimmelpilzpopulation zum Zweck der höchsten Wirkung eingestellt werden.

Nach einer bevorzugten Ausführungsform betrifft die vorliegende Erfindung eine Zusammensetzung der vorgenannten Art, wobei es sich um kationischen, anionischen oder nichtionischen deacetylierten Chitosane und Chitosanderivate handelt, vorzugsweise um Trimethylchitosaniumchlorid, das Dimethyl-*N*-_{*c bis c*-} alkylchitosaniumiodid, quartäre Chitosansalze mit Anionen der Phosphorsäure, *O-*Carboxymethylchitin-Natriumsalze, *O*-Acylchitosan, *N*,*O*-Acylchitosan, *N*-3-Trimethylammonium-2-hydroxypropyl-chitosan und *O*-TEAE-Chitiniodid.

Nach einer bevorzugten Ausführungsform betrifft die vorliegenden Erfindung eine Zusammensetzung der vorgenannten Art, wobei die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise zwischen 2,5 x 10⁵ g/mol und 9,5 x 10⁵ g/mol liegen.

Nach einer bevorzugten Ausführungsform betrifft die vorliegende Erfindung eine Zusammensetzung der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung eine Zusammensetzung der vorgenannten Art, wobei die mikrobiellen Wirkstoffe in Mischungsverhältnissen zwischen 0,1 Gew-% bis 99,9 Gew-%, vorzugsweise 1 bis 99 Gew-%, insbesondere 5 bis 95 Gew-% vorliegen.

Nach einer bevorzugten Ausführungsform betrifft die vorliegende Erfindung eine Zusammensetzung der vorgenannten Art, weiterhin enthaltend übliche Hilfs- und Zusatzstoffe, insbesondere saure und basische Polykondensations-Katalysatoren und /oder Flouridionen.

### Beschichtung

Der Erfindung liegt weiter die Aufgabe zugrunde, eine nanoskalige und biozide Behälterverschlußbeschichtung, insbesondere Korkenbeschichtung zur Verfügung zu stellen, die mittels der Kombination verschiedener biozider Wirkstoffe wie Chitosan, 2,4,4'Trichlor-2'-hydroxy-diphenylether und quartärer Ammoniumsalze die Besiedlung der Glas und / oder Korkoberflächen durch Bakterien, Viren, und vorzugsweise Schimmelpilzen, verhindert.

Die erfindungsgemäße Aufgabe wird dadurch gelöst, dass durch eine aus polymerisiertem SiO₂ (Softkeramik) bestehende nanoskalige Behälterverschlussinsbesondere (Glas)Korkenbeschichtung mit darin enthaltenen antimikrobiellen Wirkstoffen das Wachstum von Schimmelpilzen auf eben dieser Verschlussinsbesondere Korkenoberfläche gestoppt wird. In der Folge kann die Methylierung von phenolhaltigen Precursern durch Schimmelpilze nicht mehr stattfinden, so dass es nicht zu einer Bildung des 2,4,6-Trichloranisols kommt.

Die Erfindung betrifft daher nanoskalige, insbesondere 50 nm bis 300 nm, vorzugsweise zwischen 120 nm und 250 nm dicke antibakterielle Behälterverschlussbeschichtung, enthaltend eine nicht poröse anorganische polymerisierte SiO₂-Schicht, aufgebracht auf einen Behälterverschluss aus Kork, und/oder Glas, wobei die Beschichtung 0,1 Gew-% bis 50 Gew-%, vorzugsweise 1 % bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält, wobei eine Mischung, die bis 50 Gew-% eines Chitosans, eines Chitosansalzes, eines alkylierten oder acylierten Chitosans und / oder eines vernetzten Chitosans enthält, ausgeschlossen ist.

Nach einer bevorzugten Ausführungsform betrifft die vorliegende Erfindung eine Beschichtung der vorgenannten Art, wobei der antibakteriellen Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Nach einer bevorzugten Ausführungsform betrifft die vorliegende Erfindung eine Behälterverschlussbeschichtung der vorgenannten Art, wobei das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexachlor-2,2'-dihydroxy-diphenylmethan, 5,5'-Dichlor-2,2'-dihydroxy-diphenylsulfid, 2,4,5,2'4',5' Hexachlor-dihydroxy-diphenylsulfid, 3,5,3',5'-Tetrachlor-2,2'-dihydroxy-diphenylslfid, 4,4'-Dihydroxy-2,2'dimethyl-diphenylmethan, 2'2-Dihydroxy-5',5-diphenylether oder 2,4,4'Trichlor-2'-hydroxy-diphenylether.

Nach einer bevorzugten Ausführungsform betrifft die vorliegende Erfindung eine Behälterverschlussbeschichtung der vorgenannten Art, wobei es sich bei dem Phenol um 2,4,4'Trichlor-2'-hydroxy-diphenylether handelt.

Nach einer bevorzugten Ausführungsform betrifft die vorliegende Erfindung eine Behälterverschlussbeschichtung der vorgenannten Art, wobei es sich um kationischen, anionischen oder nichtionischen deacetylierten Chitosane und Chitosanderivate handelt, vorzugsweise um Trimethylchitosaniumchlorid, das -Dimethyl-N-alkylchitosaniumiodid; quartäre Chitosansalze mit Anionen der Phosphorsäure, *O-*Carboxymethylchitin-Natriumsalze, *O*-Acylchitosan, *N*,*O*-Acylchitosan, *N*-3-Trimethylammonium-2-hydroxypropyl-chitosan und *O*-TEAE-Chitiniodid.

Nach einer bevorzugten Ausführungsform betrifft die vorliegende Erfindung eine Behälterverschlussbeschichtung der vorgenannten Art, wobei die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise jedoch zwischen 2,5 x 10⁵ g/mol und 9,5 x 10⁵ g/mol liegen.

Nach einer bevorzugten Ausführungsform betrifft die vorliegende Erfindung eine Behälterverschlussbeschichtung der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung eine Behälterverschlussbeschichtung der vorgenannten Art, wobei die antimikrobiellen Wirkstoffe in beliebigen Mischungsverhältnissen zwischen 0,1 Gew-% und 99,9 Gew-%, vorzugsweise 1 Gew- % bis 99 Gew-% vorliegen.

Nach einer bevorzugten Ausführungsform betrifft die vorliegende Erfindung eine Behälterverschlussbeschichtung der vorgenannten Art, wobei die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1,5 oder größer ist.

Nach einer bevorzugten Ausführungsform betrifft die vorliegende Erfindung eine Behälterverschlussbeschichtung der vorgenannten Art, wobei die SiO₂ Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Nach einer bevorzugten Ausführungsform betrifft die vorliegende Erfindung eine Behälterverschlussbeschichtung der vorgenannten Art, wobei sie auf Kork, Korkgranulat, und / oder Glas aufgebracht ist.

Nach einer bevorzugten Ausführungsform betrifft die vorliegende Erfindung eine antimikrobielle Behälterverschlussbeschichtung der vorgenannten Art, wobei sie auf ein Verbundmaterial aus Kunststoff und Naturkork und/oder Agglomeratkork, vorzugsweise ein mit Kunststoff beschichteter Naturkork aufgebracht ist.

Es können Behälterverschlüsse aus Kork und / oder Glas eingesetzt werden. Durch die duktilen, jedoch gleichzeitig flexiblen Eigenschaften der Beschichtungen (Softkeramik) lassen sich alle geometrischen Formen behandeln, dabei entsteht immer eine sehr glatte, homogene Oberfläche niedrigster Oberflächenspannung. Die Schichten können in unterschiedlichen Dicken von 50 nm bis 500 hergestellt werden, vorzugsweise jedoch in Schichten zwischen 120 nm und 250 nm.

Die Vorteile der erfindungsgemäßen antimikrobiellen Beschichtung von Korken und Gefäßverschlüssen bestehen im Wesentlichen aus den folgenden Punkten:
1. Sehr hohe Hydrophobie- und Oleophobiewerte, vergleichbar mit den Werten von Beschichtungen, die mittels Fluor-Carbon-Harzen erzeugt werden. Damit einher geht eine extrem starke antiadhäsive Wirkung, die die des PTFE noch übertrifft, es werden Kontaktwinkel von 139,5 ° erzielt (Institut Hohenstein). Dies ist vorteilhaft, um die Erstbesiedlung der Oberflächen durch Schimmelpilze und andere Mikroorganismen zu verhindern, die vor der Besiedlung des Substrates durch die Abgabe eines klebrigen Sekrets quasi testen, ob die Fläche für eine Besiedlung geeignet ist. Da dieses Sekret auf der oleophoben Fläche kaum haften bleibt, kommt es in vielen Fällen erst gar nicht zu einer Besiedlung und in Folge zu einer Koloniebildung.
2. Die sehr gut haftende Beschichtung lässt sich wegen der sehr guten duktilen Eigenschaften auf Substrate unterschiedlichster Geometrie und Beschaffenheit auftragen.
3. Die SiO₂-Matrix (Glas) ist sehr abrasionsbeständig und zeichnet sich durch nicht messbaren Abrieb und eine sehr große Härte aus. Auf Grund der ultradünnen Schichten von < 250 nm behält die Glasschicht ihre sehr guten flexiblen Eigenschaften. Die Dichtungseigenschaften des Korkens zur Flaschenwand hin werden in keiner Weise beeinträchtigt.
4. Die Immobilisierung der antimikrobiellen Wirkstoffe verhindert die Eluierung und Verdünnung der Wirkstoffe und somit ein Abnehmen der antibakteriellen Wirkung.
5. Die Beschichtungszusammensetzung besteht aus nicht-toxischen Verbindungen, die biologisch abbaubar sind. Silikate wie das SiO₂ sind die am häufigsten vorkommenden Verbindungen der Erdkruste.
6. Eventuell bereits im Korken vorhandene Chlorphenole und Chloranisole können durch die Beschichtung nicht diffundieren und somit nicht in den Wein extrahieren.
7. Durch die Mischung unterschiedlichster antimikrobieller Substanzen kann ein Breitband-Antimikrobiotikum hergestellt werden, das geeignet ist, auch stark heterogene Schimmelpilzpopulationen zu bekämpfen. Die Rezeptur kann den jeweiligen ambienten Anforderungen angepasst werden.

### Herstellung

Aufgabe der der Erfindung ist weiterhin die Herstellung der Behälterverschlussbeschichtungszusammensetzung.

Diese Aufgabe wird durch die Bereitstellung und Auswahl eines speziellen Mengenintervalls eines SiO₂-erzeugenden Mittels zusammen mit einem speziellen Mengenintervall spezieller Wirkstoffe und Umsetzung zur Zusammensetzung gelöst.

Die Erfindung betrifft daher ein Verfahren zur Herstellung einer Behälterverschlussbeschichtung der vorgenannten Art, wobei
➢ in einem ersten Verfahrensschritt die Bildung eines Solgels mit nanoskaligen Partikeln in an sich bekannter Weise durch Hydrolyse eines Prekursors in Wasser durchgeführt wird und
➢ in einem zweiten Verfahrensschritt die in einem hydrophilen Lösemittel gelösten /dispergierten antimikrobiellen Wirkstoffe der vorbeschriebenen Art zugeführt werden.

Nach einer bevorzugten Ausführungsform betrifft die vorliegende Erfindung ein Verfahren der vorgenannten Art, wobei der Prekusor ausgewählt ist aus der Gruppe der Alkyltriethoxysilane und der Aminopropyltriethoxysilane, dem bis zu 20 Gew.-% Al₂O₃, TiO₂, ZrO₂, MgO und / oder V₂O₅, bezogen auf den Gesamtanteil an SiO₂, zugefügt worden sind, und die Umsetzung innerhalb von 24 Stunden bei 20° C erfolgt.

Nach einer bevorzugten Ausführungsform betrifft die vorliegende Erfindung ein Verfahren der vorgenannten Art, wobei das hydrophile Lösemittel ausgewählt ist aus Wasser und / oder linearen oder verzweigten Alkoholen mit bis zu 6 Kohlenstoffatomen, insbesondere Wasser enthaltenden Alkoholen, insbesondere Ethanol.

### Applikation

Aufgabe der der Erfindung ist weiterhin die Aufbringung der Behälterverschlussbeschichtungszusammensetzung auf dem Behälterverschluss.

Diese Aufgabe wird durch die Bereitstellung und Auswahl eines speziellen Mengenintervalls eines SiO₂-erzeugenden Mittels zusammen mit einem speziellen Mengenintervall spezieller Wirkstoffe und dessen Aufbringung auf der Behälterverschlussoberfläche gelöst.

Die Erfindung betrifft daher ein Verfahren zur Aufbringung der Zusammensetzung, der vorgenannten Art auf Trägermaterialien durch Kontaktieren der Oberfläche, insbesondere Sprühen, Tauchen, Schleudern, Streichen, Begießen, Filmbegießen und Sprühbalken mit wenigstens einer Sprühdüse.

Die Beschichtung der Behälterverschlüsse, insbesondere Korken kann durch übliche Verfahren wie Sprühen (spray coating), Tauchen (dip coating), Schleudern (spin coating), Streichen, Begießen erfolgen. Ebenfalls möglich und erprobt sind industrielle Beschichtungsverfahren wie, Filmbegießmaschinen, Sprühbalken mit einer oder mehrerer Sprühdüsen.

Die Erfindung betrifft schließlich einen Behälterverschluss der vorgenannten Art, wobei die Beschichtung eine Barriere gegen Stoffe aus der Atmosphäre und / oder Stoffe, die in direktem Kontakt mit dem Behälterverschluss stehen und / oder im Verschluss enthalten oder aus diesem abgespalten werden, bildet.

Die Erfindung betrifft schließlich einen Behälterverschluß der vorbeschrienen Art, bei dem es sich um einen am Behälter befestigten oder abnehmbaren Verschluß handelt.

Die vorliegende Erfindung wird weiter durch Figuren näher erläutert.

Es zeigen:
- Fig. 1:: Eine REM-Aufnahme eines unbeschichteten Naturkorkens (Stand der Technik) in 100 facher Vergrößerung
- Fig. 2:: eine REM-Aufnahme eines gemäß Ausführungsbeispiel 1 beschichteten Naturkorkens in 100 facher Vergrößerung.

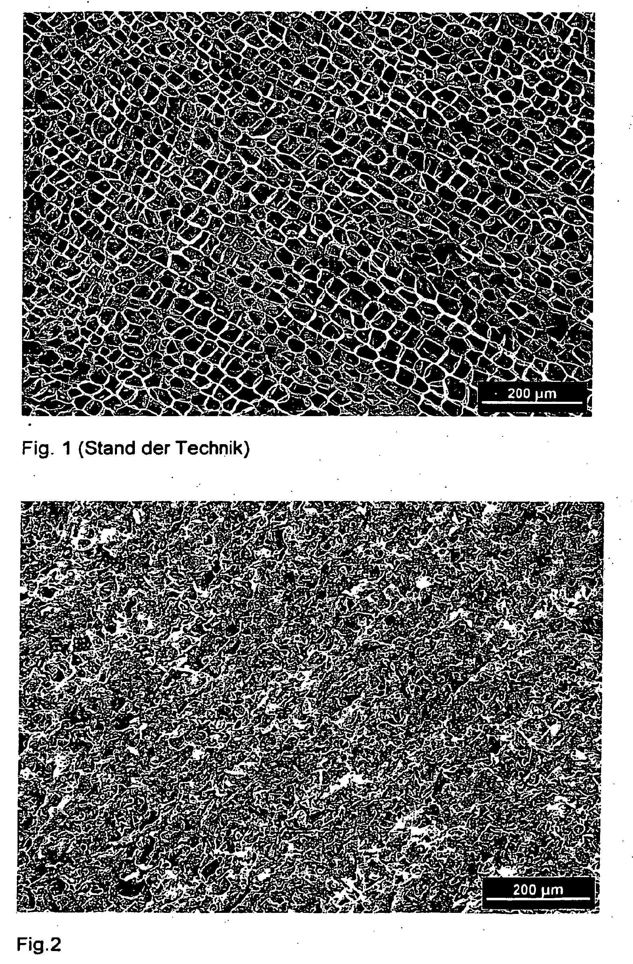

Fig. 1 zeigt die Oberfläche des unbeschichteten Korkens nach dem Stand der Technik, die durch Ihre Wabenstruktur und große porige Oberfläche Angriffspunkte für eine Besiedelung durch Mikroorganismen bietet.

Fig. 2 zeigt die Oberfläche eines erfindungsgemäß gemäß Ausführungsbeispiel 1 beschichteten Korkens. Dort ist die Wabenstruktur nahezu homogen versiegelt

Die vorliegende Erfindung wird nachfolgend zunächst durch Ausführungsbeispiele in Form von Herstellbeispielen und Anwendungsbeispielen näher erläutert.

### Ausführungsbeispiel 1 "Weinkorken", Formulierung 1:

### 1. Herstellung eines wässerigen bioziden SiO₂ - Solgels,

Es werden 100 ml Tetraethoxysilan, 400 ml Wasser und 200 ml 0,01 N Salzsäure bei Umgebungstemperatur (20° C) gemischt und kontinuierlich gerührt (ca. 5 Stunden). Dabei entsteht ein wässriges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung der Biozid-Kombination (Mischungsverhältnis 50 % Chitosan 2s, 25 % Triclosan und 25 % Cetyltrimethylammoniumbromid) in 5 % Essigsäure gemischt und verrührt. Das so entstandene Solgel kann mittels verschiedener Varianten auf Korken und Behälterverschlüsse appliziert werden.

Es wurde eine weitere Formulierung 2 als 2 %ige Lösung nach dem vorgenannten Beispiel hergestellt, bei dem das Mischungsverhältnis 50 % Triclosan, 30 % Cetyltrimethylammoniumbromid und 20 % Chitosan 2s gewählt wurde.

### 2. Herstellung der bioziden SiO₂ - Beschichtung auf einem Weinkorken

Ein Weinkorken wird gereinigt und durch Tauchen in der unter 1 beschriebenen Lösung beschichtet. Anschließend wurde der Korken bei Umgebungstemperatur 24 Stunden getrocknet, nach Abschluss der Trocknungsphase entstand die Beschichtung von ca. 150 nm Schichtdicke auf der Korkenoberfläche. Dabei wurde die Sole vollständig in ein Gel umgesetzt, welches die Oberfläche und die Poren des Korkens vollständig benetzte und eine homogene, duktile Schicht bildete.

### 3. Antimikrobielle Überprüfung des Korkens

Da nur in einem Gefahrstofflabor mit Kulturen der Schimmelpilzarten Aspergillus flavus, Fusarium oxysporum, Paelomyces variotii und Penicillium citrinum (Schimmelpilze mit besonders hoher Methylierungskapazität und für die Produktion von TCA besonders relevant) gearbeitet werden darf, mussten für die Bestimmung der bioziden Wirkung alternative Prüfmethoden herangezogen werden. Der erste Test wurde in Anlehnung an EN 1040 durch das Institut Fresenius durchgeführt. Dabei wurden die Testorganismen Staphylococcus aureus (ATCC 6538) und Pseudomonas aeruginosa (ATCC 15442) verwendet. Mit Hilfe des Verdünnungs-Neutralistions- und Membranfiltrations-Verfahrens konnte gezeigt werden, dass auf der Beschichtungsoberfläche eine Bakterienreduktion um Faktor 10⁵ nach einer Expositionszeit von 60 Minuten zu verzeichnen war.

Der zweite Test zur Prüfung der antimikrobiellen Wirkung des Korkens gegen Schimmelpilze wurde der Leuchtbakterientest nach Dr. Lange (DIN 38 412 L 34/341), der als Test auf die Toxizität von Abwässern eingesetzt wird, angewandt. Als Prüfbakterium wurden Leuchtbakterien der Art "Vibrio fischeri" (NRRL-B-11117, gram-negativ) verwendet. Dieser Test beruht auf der Fähigkeit von bestimmten marinen Bakterien (v. a. Meeresbakterien) zu leuchten. Dieses Leuchten, das aufgrund enzymatischer, energiestoffwechsel-abhängiger Prozesse (Luciferin-Luciferase-System) abläuft. Kommen diese Lebewesen jedoch in ein toxisches Medium, so wird ihre Leuchtkraft gehemmt. Die Toxizität von Einzelsubstanzen, Stoffgemischen oder Eluaten wird photometrisch als Leuchthemmung ermittelt. Aus dem Grad der Hemmung des Leuchtens kann man Rückschlüsse auf den Grad der Wachstumshemmung ziehen.

In einem ersten Schritt werden die konservierten Leuchtbakterien vom Typ NRRL-B-11177 in einer Nährlösung reaktiviert und das Ausgangsleuchten photometrisch gemessen und somit die Nullprobe definiert. Danach wird die Leuchtbakterienlösung auf den zu untersuchenden Korken mittels einer Pipette aufgetragen. Nach jeweils 20, 40, 60, 80, 100, 120 und 140 Minuten wurde die Leuchtkraft photometrisch gemessen und mit dem Ausgangswert der Nullprobe verglichen. Es konnte gezeigt werden, dass bereits nach einer Expositionszeit von 60 Minuten das Wachstum der Leuchtbakterien zu 100 % gestoppt wurde.

Eingesetzt wurde der Dr. Lange LUMIStox-Meßplatz, bestehend aus dem LUMIStox-Meßgerät, dem LUMIStherm-Temperiergerät und dem Thermodrucker LD 100.

### Ausführungsbeispiel 2 "Glaskorken":

### 1. Herstellung eines wässerigen bioziden SiO₂ - Solgels

Es werden 100 ml Tetraethoxysilan, 400 ml Ethanol und 200 ml 0,01 N Salzsäure bei Umgebungstemperatur (20° C) gemischt und kontinuierlich gerührt (ca. 5 Stunden). Dabei entsteht ein flüssiges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung Triclosan in 5 % Essigsäure gemischt und verrührt. Das so entstandene Solgel kann mittels verschiedener Varianten auf Substrate aus Glas appliziert werden.

### 2. Herstellung der bioziden SiO₂ - Beschichtung auf einem Glaskorken

Ein Glaskorken wurde in einer 20 %gen Peroxidlösung (H2O2) gereinigt und durch Tauchen in der unter 1 beschriebenen Lösung beschichtet. Anschließend wurde der Korken bei Umgebungstemperatur 24 Stunden getrocknet, nach Abschluss der Trocknungsphase entstand die Beschichtung von ca. 150 nm Schichtdicke auf dem Glaskorken. Dabei wurde die Sole vollständig in ein Gel umgesetzt, welches die Oberfläche des Korkens vollständig benetzte und eine homogene, duktile Schicht bildete.

### 3. Antimikrobielle Überprüfung des Korkens

Da nur in einem Gefahrstofflabor mit Kulturen der Schimmelpilzarten Aspergillus flavus, Fusarium oxysporum, Paelomyces variotii und Penicillium citrinum (Schimmelpilze mit besonders hoher Methylierungskapazität und für die Produktion von TCA besonders relevant) gearbeitet werden darf, mussten für die Bestimmung der bioziden Wirkung alternative Prüfmethoden herangezogen werden. Der erste Test wurde in Anlehnung an EN 1040 durch das Institut Fresenius durchgeführt. Dabei wurden die Testorganismen Staphylococcus aureus (ATCC 6538) und Pseudomonas aeruginosa (ATCC 15442) verwendet. Mit Hilfe des Verdünnungs-Neutralistions- und Membranfiltrations-Verfahrens konnte gezeigt werden, dass auf der Beschichtungsoberfläche eine Bakterienreduktion um Faktor 10⁵ nach einer Expositionszeit von 60 Minuten zu verzeichnen war.

Der zweite Test zur Prüfung der antimikrobiellen Wirkung des Korkens gegen Schimmelpilze wurde der Leuchtbakterientest nach Dr. Lange (DIN 38 412 L 34/341), der als Test auf die Toxizität von Abwässern eingesetzt wird, angewandt. Als Prüfbakterium wurden Leuchtbakterien der Art "Vibrio fischeri" (NRRL-B-11117, gram-negativ) verwendet. Dieser Test beruht auf der Fähigkeit von bestimmten marinen Bakterien (v.a.Meeresbakterien) zu leuchten. Dieses Leuchten, das aufgrund enzymatischer, energiestoffwechsel-abhängiger Prozesse (Luciferin-Luciferase-System) abläuft. Kommen diese Lebewesen jedoch in ein toxisches Medium, so wird ihre Leuchtkraft gehemmt. Die Toxizität von Einzelsubstanzen, Stoffgemischen oder Eluaten wird photometrisch als Leuchthemmung ermittelt. Aus dem Grad der Hemmung des Leuchtens kann man Rückschlüsse auf den Grad der Wachstumshemmung ziehen.

In einem ersten Schritt werden die konservierten Leuchtbakterien vom Typ NRRL-B-11177 in einer Nährlösung reaktiviert und das Ausgangsleuchten photometrisch gemessen und somit die Nullprobe definiert. Danach wird die Leuchtbakterienlösung auf den zu untersuchenden Korken mittels einer Pipette aufgetragen. Nach jeweils 20, 40, 60, 80, 100, 120 und 140 Minuten wurde die Leuchtkraft photometrisch gemessen und mit dem Ausgangswert der Nullprobe verglichen. Es konnte gezeigt werden, dass bereits nach einer Expositionszeit von 60 Minuten das Wachstum der Leuchtbakterien zu 100 % gestoppt wurde.

Eingesetzt wurde der Dr. Lange LUMIStox-Meßplatz, bestehend aus dem LUMIStox-Meßgerät, dem LUMIStherm-Temperiergerät und dem Thermodrucker LD 100.

Eine weitere Prüfung der antimikrobiellen Wirkung der Korkenbeschichtung wurde durch das Institut für Biotechnische Forschung und Entwicklung Graf GmbH durchgeführt und im folgenden beschrieben.

Es wurden zwei unterschiedlich beschichtete sowie ein nicht beschichteter Flaschenkorken (Material) zur Verfügung gestellt.
➢ Probenbezeichnung 50/02/06-1: Korken beschichtet mit Zusammensetzung gemäß Ausführungsbeispiel 1, Formulierung 1, mit gelber Reißzwecke markiert
➢ Probenbezeichnung 50/02/06-2: Korken beschichtet mit Zusammensetzung gemäß Ausführungsbeispiel 1, Formulierung 2, mit roter Reißzwecke markiert
➢ Probenbezeichnung 50/02/06-3: Korken unbeschichtet, unmarkiert
   Von der Oberfläche der Korken wurde für die Experimente eine etwa 1 mm dicke Schicht in dünnen Scheiben einer Größe von ca. 1 cm² abgetrennt.
   *Aspergillus flavus* DSMZ 62066, der aus der Deutschen Sammlung für Mikroorganismen und Zellkulturen, DSMZ, Braunschweig stammte, wurde für die Untersuchungen verwendet. Die Kultur wurde auf ME bei 8°C aufbewahrt. Vor der Verwendung wurde der Testkeim über mindestens 2 Passagen in mindestens dreitäglichem Abstand auf ME subkultiviert (Bebrütung bei 30°C). Zur Bestimmung der fungiziden Wirkung auf *Aspergillus flavus* gemäß ASTM E 2180-01 wurden die Korkmaterialien auf ihrer beschichteten Oberfläche künstlich mit dem Testkeim kontaminiert. Die Kontamination der Testflächen erfolgte durch Aufbringen von je 50 µl der Keimsuspensionen als Agarfilm (in 0,3% Agar-Agar) auf die Testflächen, die für die Versuchsdauer waagerecht gelagert wurden. Nach dem Gelieren der Agarfilme wurden die rückgewinnbaren KBE nach 0 min (direkt nach dem Gelieren des Agarfilms) sowie nach weiteren 4 und 24 Stunden bestimmt. Hierzu wurden die kontaminierten Testmaterialien in Schraubdeckelgefäße mit 5 ml "Keimrückgewinnungsmedium" (TSB; entsprechend einer Verdünnung von 1 x 10⁻²) verbracht. Die Gefäße wurden auf einem Vortex wiederholt kräftig geschüttelt, um ein möglichst weitgehendes Ablösen der Keime zu erreichen. Anschließend erfolgte die Bestimmung der Zahl der KBE, indem Endverdünnungen von 10⁻² und 10⁻⁴ (jeweils 0,1 ml) auf ME-Platten ausgespatelt und für 48 h bei 30°C bebrütet wurden. In Tabelle 2 sind jeweils die in diesem "Keimrückgewinnungsmedium" ermittelten KBE wiedergegeben.

Für jeden Testorganismus und jedes Material sowie jeden Probentnahmezeitpunkt wurden 3 Parallelansätze (Korkplättchen) kontaminiert. Es wurde die folgende Kontrolle mitgeführt: 50 µl der Keimsuspension (in 0,3% Agar-Agar) wurden in ein Schraubdeckelreagenzglas mit 5 ml TSB direkt übertragen und wie oben weiter aufgearbeitet; hiermit war eine Aussage über die KBE-Dichte der Zellsuspensionen, mit denen kontaminiert wurde, sowie über die Effizienz der Abschwemmung von den Testflächen möglich.

Tabelle 1 zeigt die für die Kontrolle ermittelte KBE. Tabelle 2 zeigt die relativen Keimüberlebensraten auf den unterschiedlichen Materialien nach unterschiedlichen Inkubationsdauern.

**Tabelle 1: KBE (in je 100 µl der angegebenen Verdünnungsstufen) der Kontrollen.**

| Verdünnungsstufe | *Aspergillus flavus* |
|---|---|
| 10⁻⁴ | 137/145 |
| 10⁻⁶ | 0/1 |

**Tabelle 2: Keimüberlebensraten auf beschichtetem sowie unbeschichtetem Kork**

| Material, Inkubationszeit | Keimüberlebensrate (zu Tabelle 2) |
|---|---|
| 50/02/06-1: Korken mit gelber Reißzwecke, 0h | 93 %* |
| 50/02/06-1: Korken mit gelber Reißzwecke, 4h | 34 % |
| 50/02/06-1: Korken mit gelber Reißzwecke, 24h | 3 % |
| 50/02/06-2: Korken mit roter Reißzwecke, 0h | 91 % |
| 50/02/06-2: Korken mit roter Reißzwecke, 4h | 45 % |
| 50/02/06-2: Korken mit roter Reißzwecke, 24h | 1 % |
| 50/02/06-3: Korken ohne Reißzwecke, 0h | 85 % |
| 50/02/06-3: Korken ohne Reißzwecke, 4h | 56 % |
| 50/02/06-3: Korken ohne Reißzwecke, 24h | 34 % |

| | |
|---|---|
| * die KBE der auf die Korken aufgebrachten Keimsuspension wurde gleich 100 % gesetzt | |

Zur Bestimmung der fungistatischen Wirkung auf *Aspergillus flavus* (in Anlehnung an die ISO Standard Methode 846) wurden die Korkmaterialien auf ihrer beschichteten Oberfläche künstlich mit dem Testkeim kontaminiert.

Die Kontamination der Testflächen erfolgte durch Aufbringen von je 50 µl der Keimsuspensionen in Glucose-Mineralsalzlösung auf die Testflächen, die für die Versuchsdauer waagerecht gelagert wurden. Die kontaminierten Korkplättchen wurden auf eine Mineralsalz-Agarplatte verbracht und bei 30°C bebrütet. Die Entwicklung des Schimmelpilzmycels wurde täglich kontrolliert.
Bei der Prüfung unterschiedlicher Korken-Oberflächen zeigten sich signifikante Unterschiede hinsichtlich ihrer fungiziden Wirksamkeit gegen *Aspergillus flavus.* Die Keimrückgewinnungsrate war bei allen getesteten Materialien mit einem Wert von etwa 90% zum Zeitpunkt 0h zufrieden stellend. Es kam über die Versuchsdauer von 24h auf den beschichteten Korken zu einer nachweisbaren Reduktion der rückgewinnbaren KBE auf etwa 1 bis 3%, die unbeschichtete Korkenprobe zeigte einen Wert von ca. 40 %.

## Patentansprüche

1. Nanoskalige, insbesondere 50 nm bis 300 nm, vorzugsweise zwischen 120 nm und 250 nm dicke antibakterielle Behälterverschlussbeschichtung, enthaltend eine nicht poröse anorganische polymerisierte SiO₂-Schicht, aufgebracht auf einen Behälterverschluss aus Kork, und/oder Glas, wobei die Beschichtung 0,1 Gew-% bis 50 Gew-%, vorzugsweise 1 % bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält
**dadurch gekennzeichnet, dass** der antibakteriellen Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

2. Behälterverschlussbeschichtung nach Anspruch 1, **dadurch gekennzeichnet, dass** das halogenierte Dihydroxydiphenylmethan, -sulfid und -ether ausgewählt ist aus 5,5'-Dichlor-2,2'-diydroxy-diphenylmethan, 3,5,3',5'-Tetrachlor-4,4'-dihydroxy-diphenylmethan, 3,5,6,3',5',6'-Hexchlor-2,2'-diydroxy-diphenylmethan, 5,5'-Dichlor-2,2'-dihydroxy-diphenylsulfid, 2,4,5,2',4',5' Hexachlor-dihydroxy-diphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'-Trichlor-2'-hydroxydiphenylether.

3. Behälterverschlussbeschichtung nach Anspruch 1 oder 2, **dadurch gekennzeichnet, dass** es sich bei dem Phenol um 2,4,4'-Trichlor-2'-hydroxy-diphenylether handelt. ,

4. Behälterverschlussbeschichtung nach Anspruch 1, **dadurch gekennzeichnet, dass** es sich um kationischen, anionischen oder nichtionischen deacetylierten Chitosane und Chitosanderivate handelt, vorzugsweise um Trimethylchitosaniumchlorid, das -Dimethyl-*N*-*_{C2bis C12}*alkylchitosaniumiodid, quartäre Chitosansalze mit Anionen der Phosphorsäure, *O*-Carboxymethylchitin-Natriumsalze, *O*-Acylchitosan, *N*,*O*-Acylchitosan, N-3-Trimethylammonium-2-hydroxypropyl-chitosan und *O*-TEAE-Chitiniodid.

5. Behälterverschlussbeschichtung nach Anspruch 1, **dadurch gekennzeichnet, dass** die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise jedoch zwischen 2,5 x 10⁵ g/mol und 9,5 x 10⁵ g/mol liegen.

6. Behälterverschlussbeschichtung nach Anspruch 1, **dadurch gekennzeichnet, dass** es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

7. Behälterverschlussbeschichtung nach Anspruch 1, **dadurch gekennzeichnet, dass** die antimikrobiellen Wirkstoffe in beliebigen Mischungsverhältnissen zwischen 0,1 Gew-% und 99,9 Gew-%, vorzugsweise 1 Gew- % bis 99 Gew-% vorliegen.

8. Behälterverschlussbeschichtung nach Anspruch 1, **dadurch gekennzeichnet, dass** die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1,5 oder größer ist.

9. Behälterverschlussbeschichtung nach Anspruch 1 oder 8, **dadurch gekennzeichnet, dass** die SiO₂ Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gel-% aus der Gruppe der Al₂O₃, TiO₂ und ZrO₂.

10. Verfahren zur Herstellung einer Behälterverschlussbeschichtung nach vorstehenden Ansprüchen, **dadurch gekennzeichnet, dass**
➢ in einem ersten Verfahrensschritt die Bildung eines Solgels mit nanoskaligen Partikeln in an sich bekannter Weise durch Hydrolyse eines Prekursors in Wasser durchgeführt wird und
➢ in einem zweiten Verfahrensschritt die in einem hydrophilen Lösemittel gelösten / dispergierten antimikrobiellen Wirkstoffe gemäß Ansprüchen 1 bis 9 der Sole zugeführt werden.

11. Verfahren nach Anspruch 10, **dadurch gekennzeichnet, dass** der Prekusor ausgewählt ist aus der Gruppe der Alkyltriethoxysilane und der Aminopropyltriethoxysilane, dem bis zu 20 Gew.-% Al₂O₃, TiO₂, ZrO₂, MgO und /oder V₂O₅, bezogen auf den Gesamtanteil an SiO₂, zugefügt worden sind und die Umsetzung innerhalb von 24 Stunden bei 20° C erfolgt.

12. Verfahren nach Anspruch 10, **dadurch gekennzeichnet, dass** das hydrophile Lösemittel ausgewählt ist aus Wasser und / oder linearen oder verzweigten Alkoholen mit bis zu 6 Kohlenstoffatomen, insbesondere Wasser enthaltenden Alkoholen, insbesondere Ethanol.

13. Verfahren zur Aufbringung der Zusammensetzung, erhalten nach Ansprüchen 10 bis 12, auf die Trägermaterialien Glas und / oder Kork durch Kontaktieren der Oberfläche, insbesondere Sprühen, Tauchen, Schleudern, Streichen, Begießen, Filmbegießen und Sprühbalken mit wenigstens einer Sprühdüse.

14. Behälterverschluss erhältlich nach einem der Ansprüche 1 bis 13, **dadurch gekennzeichnet, dass** die Beschichtung eine Barriere gegen Stoffe aus der Atmosphäre und / oder Stoffe, die in direktem Kontakt mit dem Behälterverschluss stehen und / oder im Verschluss enthalten oder aus diesem abgespalten werden, bildet.

15. Behälterverschluß erhältlich nach einen der Ansprüche 1 bis 14, **dadurch gekennzeichnet, dass** es sich um einen am Behälter befestigten oder abnehmbaren Verschluß handelt.

## Claims

1. Nanoscaled, notably 50 nm to 300 nm, preferably between 120 nm and 250 nm thick antibacterial container closure coating, containing a non-porous inorganic polymerised SiO₂-layer, applied on a container closure made of cork and / or glass, whereas the coating contains 0.1 % by weight to 50 % by weight preferably 1 % to 20 % by weight, related to the total composition of at least one antibacterial agent in terms of cationic, anionic or non-ionic deacetylated chitosans and chitosan derivatives and/or phenols of the group of halogenated dihydroxydiphenyl methanes, dihydroxydiphenyl sulphides, and dihydroxydiphenyl ether and / or substituted quaternary ammonium salts of the alkylated phosphoric acid, **characterized in that** the antibacterial agent is chosen from at least 2 compounds of the 3 following compounds classes in terms of cationic, anionic or non-ionic deacetylated chitosans and chitosan derivatives and/or phenols of the group of halogenated dihydroxydiphenyl methanes, dihydroxydiphenyl sulphides, and dihydroxydiphenyl ether and / or substituted quaternary ammonium salts of the alkylated phosphoric acid.

2. The container closure coating according to claim 1 **characterized in that** the halogenated dihydroxydiphenyl methane, dihydroxydiphenyl sulphides and dihydroxydiphenyl ether is selected from 5,5'-dichloro-2,2'-diydroxydiphenyl methane, 3,5,3',5'-tetrachloro-4,4'-dihydroxy-diphenyl methane, 3,5,6,3',5',6'-hexachloro-2,2'-dihydroxydiphenyl methane, 5,5'-dichloro-2,2'-dihydroxydiphenyl sulphide, 2,4,5,2',4',5' hexachloro-dihydroxy-diphenyl sulphide, 3,5,3',5'-tetrachloro-2,2'-dihydroxydiphenyl sulphide, 4,4'-dihydroxy-2,2'-dimethyl-diphenyl methane, 2'2-dihydroxy-5',5-diphenyl ether or 2,4,4'-trichloro-2'-hydroxydiphenyl ether.

3. The container closure coating according to claim 1 or 2 **characterized in that** the phenol is 2,4,4'trichloro-2'-hydroxydiphenyl ether.

4. The container closure coating according to claim 1 **characterized in that** it concerns cationic, anionic or nonionic deacetylated chitosans and chitosan derivatives, preferably trimethylchitosanium chloride, the -dimethyl-*N*-_{C2} to _{C12}-alkylchitosanium iodide, quaternary chitosan salts with anions of the phosphoric acid, *O*-carboxymethylchitin sodium salts, *O*-acylchitosan, *N*,*O*-acylchitosan, *N*-3-trimethylammonium-2-hydroxypropyl-chitosan and *O*-TEAE-chitin iodide.

5. The container closure coating according to claim 1 **characterized in that** chitosans and chitsanderivates are low molecular chitosans and chitosandertivates, whereas the molecular weights are situated between 1.0 x 10⁵ g/mol and 3.5 x 10⁶ g/mol, however preferably between 2.5 x 10⁵ g/mol and 9.5 x 10⁵ g/mol.

6. The container closure coating according to claim 1 **characterized in that** it concerns quaternary ammonium salts of the alkylated phosphoric acid, whereas each of the alkyl groups, presents independently of each other 1 to 12 carbon atoms and / or halogenated ammonium salts, preferably cetyltrimethylammonium bromide, didecyl-dimethylammonium chloride, hexadecylpyridinium chloride and polyoxyalkyltrialkylammonium chloride.

7. The container closure coating according to claim 1 **characterized in that** the antimicrobial agents are present in any mixing ratios between 0.1 % by weight to 99.9 % by weight, preferably 1 % by weight to 99 % by weight.

8. The container closure coating according to claim 1 **characterized in that** the SiO₂-layer is at least partly consisting of R-SiOₙ, and/or R₂-SiOₙ, whereas R is H, alkyl, epoxy-alkyl- or aminoalkyl- and n is at least 1.5.

9. The container closure coating according to claim 1 or 8 **characterized in that** the SiO₂ layer comprises Al₂O₃, TiO₂, ZrO₂ MgO and/or V₂O₅ in any mixing ratio, preferably in mixing ratios between 0,1 % by weight and 50 % by weight from the group of Al₂O₃,TiO₂, ZrO₂, MgO and V₂O₅ especially favoured in mixing ratios between 1 % by weight and 20 % by weight from the group of Al₂O₃, TiO₂ and ZrO₂.

10. Process of making a container closure coating according to above mentioned claims **characterized in that:**
➢ in a first process step the formation of a sol gel with nanoscaled particles is achieved in a per se known manner by hydrolysis of a precursor in water
➢ in a second process step the antimicrobial agents solved / dispersed in a hydrophilic solvent according to claim 1 to 9 has been conducted to the brine

11. The Process according to claim 10 **characterized in that** the precursor is selected from the group of alkyltriethoxysilane and of aminopropyltriethoxysilane to whom 20 % by weight Al₂O₃,TiO₂, ZrO₂ ,MgO and/or V₂O₅ related to the total share of SiO₂, has been added and the conversion follows at 20°C within 24 hours.

12. The process according to claim 10 **characterized in that** the hydrophilic solvent is selected from water and/or linear or branched alcohols with up to 6 carbon atoms, in particular water containing alcohols, especially ethanol.

13. Process for the application of the composition, obtained according to claims 10 to 12 on the substrates glass and / or cork through contacting the surface in particular spraying, dipping, hurling, coating, perfusion, film perfusion and spray beam with at least one spray nozzle.

14. Container closure obtainable according to one of the claims 1 to 13 **characterized in that** the coating creates a barrier against substances out of the atmosphere and/ or substances which are in direct contact with the container closure and/or are contained in the closure or are separated of it.

15. The container closure obtainable according to one of the claims 1 to 14, **characterized in that** it concerns a closure that is fixed on the container or is removable.

## Revendications

1. Revêtement pour couvercle de récipient antibactérien à l'échelle nanométrique, notamment de 50 à 300 nm et de préférence entre 120 et 250 nm contenant une couche de SiO₂ polymérisée anorganique non poreuse, appliquée sur un couvercle en liège et / ou en verre, le revêtement contenant de 0,1 % à 50 % en poids, et de préférence de 1 % à 20 % en poids d'au moins un agent antibactérien par rapport à l'ensemble de la composition, sous forme de chitosanes et dérivés de chitosanes et / ou de phénols cationiques, anioniques ou non ioniques déacétylés du groupe des dihydroxydiphenylméthanes halogéné, des dihydroxydiphenylméthanes sulfure et / ou dihydroxydiphenylméthanes éthers et / ou de sels d'ammonium quaternaires de l'acide phosphorique alkylé, **caractérisé en ce que** l'agent antibactérien est choisi parmi au moins deux composés des 3 classes suivantes sous forme de chisotanes et dérivés de chisotanes et / ou de phénols cationiques, anioniques ou non ioniques déacétylés du groupe des dihydroxydiphenylméthanes, des dihydroxydiphenylméthanes sulfure et / ou dihydroxydiphenylméthanes éthers et / ou de sels d'ammonium quaternaires de l'acide phosphorique alkylé.

2. Revêtement pour couvercle de récipient selon la revendication 1, **caractérisé en ce que** le dihydroxydiphénylméthane halogéné, le dihydroxydiphenylméthane sulfure et / ou dihydroxydiphenylméthane éther est choisi parmi le 5,5'-dichloro-2,2'-dihydroxy diphénylméthane, le 3,5,3',5'-tétrachloro-4,4'-dihydroxy-diphénylméthane, le 3,5,6,3',5',6'-hexachloro-2,2'-dihydroxy-diphénylméthane, le sulfure de 5,5' dichloro-2,2'-dihydroxy-diphényle, le sulfure de 2,4,5,2',4',5'-hexachlorodihydroxy-diphényle, le sulfure de 3,5,3',5'-tétrachloro-2,2'-hydroxy-diphényle, le 4,4'-hydroxy-2,2'-diméthyl diphénylméthane, le 2'2-dihydroxy-5',5-diphényléther ou le 2,2,4-trichloro-2'-hydroxydiphényléther.

3. Revêtement pour couvercle de récipient selon les revendications 1 et 2,
**caractérisé en ce que** le phénol consiste en 2,4,4'-trichloro 2'-hydroxy-diphényléther.

4. Revêtement pour couvercle de récipient selon la revendication 1, **caractérisé en ce qu'**il s'agit de chitosanes ou de dérivés de chitosanes cationiques, anioniques ou non ioniques déacétylés, de préférence de chlorure de triméthylchitosanium contenant de l'iodure de diméthyl-N-*_{C2 à C12}*alkylchitosanium, des sels quaternaires du chitosane avec des anions d'acide phosphorique, des sels de sodium de la O-carboxyméthylchitine, du O-acylchitosane, du *N*,*O*-acylchitosane, du *N*-3trimethylammonium-2-hydroxypropylchitosane et de l'iodure de la *O*-TEAE chitine.

5. Revêtement pour couvercle de récipient selon la revendication 1, **caractérisé en ce que** les chitosanes et les dérivés de chitosanes sont des chitosanes et des dérivés de chitosanes de faible masse moléculaire, celle-ci se situant entre 1,0 x 10⁵ g/mol et 3,5 x 10⁶ g/mol, et de préférence entre 2,5 x 10⁵ g/mol et 9,5 x 10⁵ g/mol.

6. Revêtement pour couvercle de récipient selon la revendication 1, **caractérisé en ce qu'**il s'agit de sels d'ammonium quaternaires de l'acide phosphorique alkylé, chacun des restes d'alkyle présentant indépendamment l'un de l'autre ayant de 1 à 12 atomes de carbone et / ou des sels d'ammonium halogénés, de préférence le bromure de cetyltrimethylammonium, le chlorure de didecyldimethylammonium, le chlorure d'hexadecylpyridinium et le chlorure de polyoxyalkyltrialkylammonium.

7. Revêtement pour couvercle de récipient selon la revendication 1, **caractérisé en ce que** les agents antimicrobiens représentent entre 0,1 % et 99,9 % en poids du mélange, de préférence de 1 % à 99 % en poids.

8. Revêtement pour couvercle de récipient selon la revendication 1, **caractérisé en ce que** la couche de SiO₂ est composée au moins en partie de R-SiOₙ et /ou R₂-SiOₙ, R correspondant à hydrogène, alkyle, aryl-, epoxy-alkyle- ou aminoalkyl et n étant égal ou supérieur à 1,5.

9. Revêtement pour couvercle de récipient selon les revendications 1 et 8, **caractérisé en ce que** la couche de SiO₂ contient une quantité quelconque de Al₂O₃, TiO₂, ZrO₂, MgO et/ou de V₂O₅ de préférence entre 1 % et 20 % en poids des groupes Al₂O₃, TiO₂ et ZrO₂.

10. Procédé de fabrication d'un revêtement pour couvercle de récipient selon les revendications précédentes, **caractérisé en ce que**
➢ dans une première phase du procédé un sol-gel est fabriqué avec des particules à l'échelle nanométrique de manière déjà connue par l'hydrolyse d'un précurseur dans l'eau et
➢ dans une deuxième phase du procédé, les agents antimicrobiens selon les revendications 1 à 9 dissous / dispersés dans un solvant hydrophile sont ajoutés à l'eau saline.

11. Procédé selon la revendication 10, **caractérisé en ce que** le précurseur est choisi parmi le groupe des alkyltriéthoxysilanes et des aminopropyltriéthoxysilanes, auxquels ont été ajoutés jusqu'à 20 % en poids de Al₂O₃, TiO₂, ZrO₂, MgO et / ou de V₂O₅ par rapport à la quantité totale de SiO₂, et que la mise en oeuvre a lieu dans les 24 heures à 20° C.

12. Procédé selon la revendication 10, **caractérisé en ce que** le solvant hydrophile est composé d'eau et / ou d'alcools linéaires ou non-linéaires avec jusqu'à 6 atomes de carbone, notamment d'alcools contenant de l'eau et en particulier de l'éthanol.

13. Procédé destiné à appliquer la composition obtenue selon les revendications 10 à 12 sur les supports en verre et / ou en liège par contact avec la surface, notamment par pulvérisation, immersion, centrifugation, peinture, arrosage, coulage du film, pulvérisation par rampe avec au moins une buse.

14. Couvercle de récipient selon les revendications 1 à 13, **caractérisé en ce que** le revêtement forme une couche de protection contre les particules se trouvant dans l'atmosphère et/ou les particules en contact direct avec le couvercle du récipient et/ou contenu dans le couvercle ou s'en détachant.

15. Couvercle de récipient disponible selon l'une des revendications 1 à 14, **caractérisé en ce qu'**il s'agit d'un couvercle fixé sur le récipient ou amovible.
